# EUROPÄISCHE PATENTSCHRIFT

(11) **EP 3 932 575 B1**
(45) Veröffentlichungstag und Bekanntmachung des Hinweises auf die Patenterteilung: **08.03.2023**
(21) Anmeldenummer: 20183857.0
(22) Anmeldetag: 03.07.2020
(51) Int. Cl.: B21C 1/00, B21C 37/04, C22C 1/00, C22F 1/00, B32B 15/01, C23C 26/00, H01B 1/02

(54) **VERFAHREN ZUR HERSTELLUNG VON MANTELDRÄHTEN MIT NI-KERN UND PT-MANTEL**
METHOD FOR PRODUCING SHEATHED WIRES WITH NI CORE AND PT SHEATH
PROCÉDÉ DE FABRICATION DE FILS SOUS GAINE POURVUS D'UN NOYAU NI ET D'UNE GAINE PT

(43) Veröffentlichungstag der Anmeldung: 05.01.2022
(73) Patentinhaber: Heraeus Deutschland GmbH & Co. KG, 63450 Hanau (DE)
(72) Erfinder: KRÄMER, Winfried, 63450 Hanau (DE)
(74) Vertreter: Schultheiss & Sterzel Patentanwälte PartG mbB

(56) Entgegenhaltungen:
- DE-A1- 10 153 217
- DE-B4- 10 153 217
- FR-A- 843 167
- GB-A- 400 808

## Beschreibung

Die Erfindung betrifft ein Verfahren zur Herstellung eines Manteldrahts mit einem Nickel-Kern mit einem Platin-Mantel, die als Kontaktdrähte für Temperatursensoren verwendbar sind. Die Erfindung betrifft auch einen Manteldraht hergestellt mit einem solchen Verfahren.

Manteldrähte kombinieren die Eigenschaften unterschiedlicher Materialien und können daher in unterschiedlichen Bereichen nutzbringend eingesetzt werden. Beispielsweise können Manteldrähte als Kontaktdrähte zur Kontaktierung von Temperatursensoren eingesetzt werden. Nickel-Platin-Manteldrähte mit einem Nickel-Kern und mit einem Platin-Mantel werden vorzugsweise als Anschlussleitungen beziehungsweise Zuleitungsdrähte für Widerstandsthermometer mit einem Messwiderstand aus Platin verwendet.

Aus der DE 38 32 342 C1 ist ein Manteldraht mit einem Mantel aus Platin bekannt, der einen Kern aus einer Palladium-Legierung mit 1 bis 5 Gew% Wolfram einhüllt. Das Mantelvolumen ist bezogen auf das Gesamtvolumen des Manteldrahts relativ hoch. Zur Herstellung wird ein stabförmiger Kernwerkstoff aus einer Palladium-Legierung, die 1 bis 5 Gew% Wolfram enthält, in ein Rohr aus Platin eingebracht und diese Stabrohranordnung wird auf einen Enddrahtdurchmesser gezogen.

Die DE 41 25 980 A1 offenbart einen Nickel-Platin-Manteldraht mit Nickel-Kern und Platin-Mantel. Diese Manteldrähte weisen gegenüber unter Luftatmosphäre selbst passivierten Nickeldrähten eine verbesserte Bondbarkeit auf. Ein derartiger Anschlussdraht ist für Sensoren mit einem Einsatzbereich bis +500 °C verwendbar.

Die GB 400 808 A (Basis für den Oberbegriff des Anspruchs 1) und die EP 0 706 028 A1 offenbaren Platin-Manteldrähte mit einem Kern aus einer Nickel-Eisen-Legierungen. Mit dem Platin-Mantel wird eine gegenüber dem inneren Draht aus einer Nickellegierung höhere chemische Resistenz geschaffen.

Als problematisch erweist sich die verhältnismäßig niedrige Obergrenze der Temperatur (in der Praxis bei ca. 600°C), woraus sich nur ein beschränkter Anwendungsbereich ergibt. Bei erhöhten Temperaturen muss damit gerechnet werden, dass das Nickel aus dem Kern durch den Platin-Mantel diffundiert und auf der äußersten Oberfläche oxidiert. Dabei verringert sich der elektrische Kontakt zu einem Chip-Anschluss (Anschluss-Pad) und auch die erforderliche mechanische Festigkeit.

Die DE 101 53 217 B4 schlägt hierzu vor, einen Nickel-Platin-Manteldraht dadurch herzustellen, dass ein Rundstab aus Nickel in ein Rohr aus Platin eingeführt wird und diese Anordnung in mehreren Schritten durch Ziehsteine gezogen wird. Dabei entsteht ein Manteldraht mit einem Kern aus Nickel und einem Mantel aus Platin, der auch bei Temperaturen oberhalb von 550 °C noch gut einsetzbar ist. Durch die relativ hohe Schichtstärke des Platins ist der Manteldraht nach außen chemisch und hochtemperaturfest geschützt und kann an die Anschlüsse eines Messwiderstands gefügt werden.

Dieser Stand der Technik erfordert mindestens einen Anteil von 25 bis 32 Gew% Platin als Platin-Mantel auf dem Nickel-Kern um eine Oxidation von Nickel in der Anwendung, zum Beispiel als Kontaktdraht in Temperatursensoren, zu verhindern. Die Pt-Schichtstärke ist durch den in der DE 101 53 217 B4 beschriebenen Prozess sehr stark streuend. Ein Pt-Anteil von 25 Gew% entspricht bei einem Durchmesser von 0,20 mm einem Pt-Mantel mit der nominellen Schichtdicke von 6,3 µm. Die Mindest-Schichtstärke der Pt-Schicht ist bei 25 Gew% Platin auf mehr als 2,5 µm spezifiziert, um die gewünschten physikalischen Eigenschaften des Manteldrahts bezüglich Verarbeitbarkeit und Vermeidung von Nickeloxiden an der Oberfläche auch bei Anwendungstemperaturen oberhalb 550°C sicherzustellen. Diese Mindestschichtstärke von 2,5 µm Platin entspricht einem Pt-Anteil von 12,3 Gew%. Der hohe Gewichtsanteil ergibt sich aus dem großen Dichteunterschied zwischen Nickel und Platin.

Statistische Auswertungen bei einem Nickel-Platin-Manteldraht mit 25 Gew% Platin und einem Durchmesser von 0,20 mm hergestellt mit einem Verfahren nach der DE 101 53 217 B4 (79 Produktionseinheiten mit jeweils vier um 90° versetzten Messpunkten, plus der minimalen und maximalen Schichtdicke, jeweils am Anfang und am Ende des Produktionseinheit) zeigen eine mittlere Schichtstärke von 6,45 µm. Wenn man die jeweils gemessenen Minimal- und Maximal-Werte der Stichproben berücksichtigt, erhält man eine Standardabweichung von 2,23 µm und daraus berechenbar einen statistisch erwartbaren Unterschreitungsanteil der Spezifikationsgrenze von kleiner als 2,5 µm von 3,8 %. Dieser Anteil muss durch aufwändige Prüfverfahren erkannt und ausselektiert werden.

Es besteht der Wunsch danach, die zur Herstellung des Manteldrahts notwendige Menge an Platin zu reduzieren, da Platin sehr teuer ist. Die verhältnismäßig hohen Werkstoffkosten sind in der Praxis als Problem anzusehen. Gleichzeitig dürfen aber nicht die vorteilhaften Eigenschaften des Manteldrahts durch eine zu starke Reduzierung der Schichtstärke des Platins verschlechtert werden.

Die Aufgabe der Erfindung besteht also darin, die Nachteile des Stands der Technik zu überwinden. Insbesondere sollen ein Verfahren zur Herstellung eines Manteldrahts mit einem Kern aus Nickel und einem Mantel aus Platin und ein Manteldraht mit einem Kern aus Nickel und einem Mantel aus Platin gefunden werden, bei dem der Platin-Mantel möglichst gleichmäßig und mit möglichst geringer Varianz in der Schichtstärke durch Ziehen durch einen Ziehstein erzeugt werden kann. Der Manteldraht soll möglichst kostengünstig und mit reproduzierbar gleichmäßiger Schichtstärke des Platin-Mantels herstellbar sein.

Die Aufgaben der Erfindung werden gelöst, durch ein Verfahren zur Herstellung eines Manteldrahts mit einem Nickel-Kern und einem Platin-Mantel, das Verfahren aufweisend die folgenden chronologischen Schritte:
A) Bereitstellen eines Stabs aus Nickel oder einer Nickel-Basislegierung und eines Rohrs aus Platin oder einer Platin-Basislegierung;
B) Beschichten des Stabs und/oder einer Innenseite des Rohrs mit zumindest einer Zwischenschicht aus wenigstens einem der Metalle Gold, Silber, Palladium, Kupfer, Iridium, Ruthenium und Rhodium oder aus einer Gold-, Silber-, Palladium-, Kupfer-, Iridium-, Ruthenium- oder Rhodium-Basislegierung;
C) Einstecken des Stabs in das Rohr nach dem Beschichten;
D) Durchlaufreduzieren des Rohrs mit dem Stab darin durch Ziehen durch einen Ziehstein oder durch Walzen oder durch Hämmern und dadurch Fügen des Rohrs mit dem Stab, wobei bei dem Durchlaufreduzieren die Außendurchmesser des Rohrs und des Stabs reduziert werden;
E) Diffusionsglühen des so gefügten Verbunds bei einer Temperatur zwischen 550 °C und 900 °C; und
F) Ziehen des diffusionsgeglühten Verbunds durch einen weiteren Ziehstein oder mehrmaliges Ziehen des diffusionsgeglühten Verbunds durch mehrere weitere Ziehsteine, wobei bei jedem Ziehen der Außendurchmesser des Verbunds reduziert wird.

Unter einer Basis-Legierung wird eine Legierung verstanden, bei der die Legierung einen Anteil von zumindest 50 Gew% des angegebenen Elements enthält.

Unter einem Mantel wird eine Schicht verstanden, die den innenliegenden Kern des Manteldrahts umschließt.

Der Verbund und der diffusionsgeglühte Verbund und alle Zwischenstufen vor dem letzten Ziehen sind im Sinne der vorliegenden Patentanmeldung Zwischenprodukte auf dem Weg zur Herstellung des Manteldrahts.

Der Ziehstein kann ein Hartmetallziehstein sein.

Erfindungsgemäß bevorzugt erfolgt das Durchlaufreduzieren in Schritt D) durch ein Ziehen des Rohrs mit dem Stab darin durch einen Ziehstein und dadurch Fügen des Rohrs mit dem Stab, wobei bei dem Ziehen die Außendurchmesser des Rohrs und des Stabs reduziert werden.

Es kann vorgesehen sein, dass die zumindest eine Zwischen eine Diffusionsschutzschicht und/oder eine Haftvermittlungsschicht ist.

Bevorzugt kann vorgesehen sein, dass der Innendurchmesser einer Durchführung der verwendeten Ziehsteine bei jedem Ziehen kleiner wird. Dadurch wird der Drahtdurchmesser kontinuierlich bei jedem Ziehen reduziert. Solche Techniken sind dem Fachmann aus dem Stand der Technik bekannt.

Es kann vorgesehen sein, dass der Platin-Mantel den Nickel-Kern radial vollständig umschließt und/oder dass der Platin-Mantel die Zwischenschicht radial vollständig umschließt. An den beiden offenen Enden des Manteldrahts kann der Nickel-Kern jedoch (in axialer Richtung) freiliegen.

Der Stab und die Zwischenprodukte haben bevorzugt eine zylindrische Symmetrie und zwar in Form eines allgemeinen Zylinders mit beliebiger Grundfläche, besonders bevorzugt jedoch mit kreisförmiger Grundfläche. Die Angaben radial und axial beziehen sich vorliegende auf eine solche Symmetrie. Auch der Manteldraht kann eine zylindrische Symmetrie haben. Es ist aber auch möglich, dass der Manteldraht bandförmig gewalzt wird oder eine andere profilierte Struktur erhält.

Der Platin-Mantel kann aus Platin oder einer Platin-Basislegierung bestehen und der Nickel-Kern kann aus Nickel oder einer Nickel-Basislegierung bestehen.

Unter einem Platin-Mantel wird ein Mantel enthaltend zumindest 50 Gew% Platin verstanden, und unter einem Nickel-Kern wird ein Kern enthaltend zumindest 50 Gew% Nickel verstanden.

Bevorzugt kann auch vorgesehen sein, dass die Zwischenschicht derart auf den Stab beschichtet wird, dass sie zumindest die radiale Mantelfläche des Stabs vollständig abdeckt, besonders bevorzugt mit einer Schichtstärke von zumindest 0,1 µm vollständig abdeckt. Bevorzugt kann auch vorgesehen sein, dass die Zwischenschicht derart auf die Innenseite des Rohrs beschichtet wird, dass sie zumindest die radiale Innenfläche des Rohrs vollständig abdeckt, besonders bevorzugt mit einer Schichtstärke von zumindest 0,1 µm vollständig abdeckt.

Der Platin-Mantel bildet vorzugsweise die radial außenliegende Oberfläche des Manteldrahts. An den beiden offenen axialen Enden des Manteldrahts kann der Nickel-Kern jedoch freiliegen.

Unter einem Kern wird der innerste, axial verlaufende Teil des Manteldrahts verstanden, der auch als Drahtseele bezeichnet wird.

Als Stab wird vorzugsweise ein Rundstab verwendet.

Als Rohr wird vorzugsweise ein Rohr mit einem zylindrischen Innenquerschnitt verwendet, besonders bevorzugt ein rotationssymmetrisches Rohr mit kreisförmigem Innenquerschnitt.

Es kann erfindungsgemäß bevorzugt vorgesehen sein, dass es sich bei dem Manteldraht um einen Mehrschichtverbunddraht handelt.

Die Nickel-Basislegierung kann zwischen 16 und 22 Gew% Chrom und/oder zwischen 0,5 und 10 Gew% Eisen und/oder bis zu 5 Gew% Aluminium enthalten. Das Nickel und die Nickel-Basislegierung können übliche herstellungsbedingte Verunreinigungen enthalten.

Die Platin-Basis-Legierung kann eine Platin-Basislegierung mit zumindest 70 Gew% Platin sein. Das Platin und die Platin-Basislegierung können übliche herstellungsbedingte Verunreinigungen enthalten.

Bei erfindungsgemäßen Verfahren kann vorgesehen sein, dass in Schritt B) die zumindest eine Zwischenschicht mit einer Stärke zwischen 0,1 µm und 100 µm auf den Stab aufgebracht wird, bevorzugt mit einer Stärke zwischen 1 µm und 30 µm aufgebracht wird, besonders bevorzugt mit einer Stärke zwischen 5 µm und 10 µm aufgebracht wird.

Hierdurch kann sichergestellt werden, dass die zumindest eine Zwischenschicht eine ausreichende Dicke aufweist, um als Diffusionsvermittler und/oder als Sperrschicht beim Durchlaufreduzieren und beim Ziehen ausreichende Wirkung zu entfalten, um die Bildung von Nickel-Platin-Phasen beziehungsweise Nickel-Platin-Legierungszonen zu verhindern oder zumindest so stark zu reduzieren, dass sie beim Durchlaufreduzieren oder Ziehen die radiale Verteilung der Schichtstärke des Platin-Mantels nur unwesentlich beeinflussen.

Des Weiteren kann vorgesehen sein, dass der Stab zylindrisch ist und einen Durchmesser zwischen 10 mm und 100 mm aufweist, wobei das Rohr einen Innendurchmesser aufweist der zwischen 0,1 mm und 5 mm größer ist als der Durchmesser des Stabs.

Hierdurch kann das Rohr mit dem eingesteckten beschichteten Stab noch gut prozessiert werden und es entsteht ein Manteldraht mit einer brauchbaren Länge.

Auch kann vorgesehen sein, dass das Rohr weniger wiegt als 25% des Gewichts des Stabs, bevorzugt das Rohr maximal 24% des Gewichts des Stabs aufweist, besonders bevorzugt das Rohr maximal 22% des Gewichts des Stabs aufweist, ganz besonders bevorzugt das Rohr maximal 21 % des Gewichts des Stabs aufweist, speziell bevorzugt das Rohr maximal 20% des Gewichts des Stabs aufweist.

Es kann auch vorgesehen sein, dass das Rohr zwischen 4% und 22% des Gewichts des Stabs aufweist, ganz besonders bevorzugt das Rohr zwischen 15% und 21% des Gewichts des Stabs aufweist.

Es kann vorgesehen sein, dass das Rohr mehr wiegt als 4% des Gewichts des Stabs, bevorzugt das Rohr mindestens 10% des Gewichts des Stabs aufweist, besonders bevorzugt das Rohr zumindest 15% des Gewichts des Stabs aufweist, ganz besonders bevorzugt das Rohr zumindest 17% des Gewichts des Stabs aufweist.

Hierdurch kann im Vergleich zu bisherigen Herstellungsverfahren, bei dem ein Platin-Rohr auf einen Nickel-Stab aufgezogen wird, um einen Manteldraht herzustellen, weniger Platin aufgewendet werden. Erst durch die Verwendung der Zwischenschicht und die Reduktion der Temperatur beim Diffusionsglühen, ist eine solche Verringerung des Anteils des Platins überhaupt möglich, da ansonsten der Platin-Mantel zu ungleichmäßig bereichsweise zu dünn oder bereichsweise ganz fehlen würde.

Ferner kann vorgesehen sein, dass der mit dem Verfahren hergestellte Manteldraht eine Dicke von mindestens 10 µm und von höchstens 1 mm aufweist, bevorzugt von mindestens 50 µm und von höchstens 500 µm aufweist, besonders bevorzugt von 200 µm aufweist.

Unter der Dicke eines Manteldrahts kann der mittlere Durchmesser des Manteldrahts verstanden werden. Bevorzugt ist der Manteldraht zylindrisch und hat einen axial gleichmäßigen kreisrunden Querschnitt. Die Dicke des zylindrischen Manteldrahts ist dann der Außendurchmesser des Manteldrahts.

Manteldrähte mit diesen Dicken sind als Verbindungsdrähte für Temperatursensoren besonders gut geeignet.

Gemäß einer bevorzugten Weiterbildung der vorliegenden Erfindung kann vorgesehen sein, dass die zumindest eine Zwischenschicht aus Gold, Silber, einer Gold-Basislegierung, einer Silber-Basislegierung oder einer Gold-Silber-Legierung besteht oder wenigstens eine der zumindest einen Zwischenschicht aus Gold, Silber, einer Gold-Basislegierung, einer Silber-Basislegierung oder einer Gold-Silber-Legierung besteht.

Mit diesen Zwischenschichten kann das Eindiffundieren von Nickel in das Platin und damit die Bildung von unerwünschten Nickel-Platin-Legierungszonen besonders gut verhindert werden. Gleichzeitig kann mit diesen Zwischenschichten eine stabile und gut verarbeitbare Verbindung des Platin-Mantels mit dem Nickel-Kern erreicht werden, so dass der Platin-Mantel gleichmäßig auf den Nickel-Kern gezogen werden kann.

Die Gold-Basis-Legierung für die Zwischenschicht enthält vorzugsweise zumindest 75 Gew% Gold. Die Silber-Basis-Legierung für die Zwischenschicht enthält vorzugsweise zumindest 80 Gew% Silber.

Des Weiteren kann vorgesehen sein, dass der Manteldraht nach Schritt F) einen Platin-Mantel aufweist, dessen Schichtstärke eine Standardabweichung von höchstens 30% der mittleren Schichtstärke des Platin-Mantels oder von höchstens 1,5 µm aufweist, bevorzugt von höchstens 20% der mittleren Schichtstärke des Platin-Mantels oder von höchstens 1 µm aufweist.

Hierdurch kann die Schichtstärke des Platin-Mantels weiter reduziert werden. Dies gelingt nur durch die Anwendung der Zwischenschicht und durch die Reduzierung der Temperatur beim Diffusionsglühen.

Die prozentuale Angabe der Standardabweichung bezieht sich auf die mittlere Schichtstärke des Platin-Mantels auf dem Nickel-Kern.

Ferner kann vorgesehen sein, dass das Beschichten des Stabs und/oder des Rohrs mit der Zwischenschicht galvanisch oder durch Auftragen einer Paste oder durch elektrostatisches Pulverbeschichten erfolgt.

Diese Verfahren sind kostengünstig und in hoher Qualität durchführbar.

Galvanisches Beschichten wird dabei bevorzugt. Alternativ kann die Beschichtung auch durch Walzpattieren oder Aufdampfen erfolgen. Das Auftragen der Paste und das elektrostatische Pulverbeschichten können mit einem Einbrennvorgang abgeschlossen werden.

Vorzugsweise kann auch vorgesehen sein, dass der Manteldraht nach Schritt F) in einem Schritt G) auf eine Spule aufgewickelt wird.

Hierdurch kann der Manteldraht anschließend leichter transportiert und maschinell prozessiert werden.

Bevorzugt kann auch vorgesehen sein, dass in Schritt F) nach jedem Ziehen oder nach zumindest einem Ziehen ein Diffusionsglühen des Verbunds bei einer Temperatur zwischen 550 °C und 900 °C erfolgt.

Hierdurch wird erreicht, dass eine stabile Verbindung des Kerns mit dem Mantel und der Zwischenschicht erzeugt wird.

Es kann auch vorgesehen sein, dass in Schritt E) und vorzugsweise auch in Schritt F) das Diffusionsglühen bei einer Temperatur zwischen 600 °C und 800 °C durchgeführt wird, bevorzugt zwischen 650 °C und 750 °C durchgeführt wird, besonders bevorzugt bei 700 °C durchgeführt wird.

Durch die Reduzierung der Temperatur beim Diffusionsglühen wird die Bildung von schädlichen Nickel-Platin-Legierungszonen verhindert beziehungsweise die Ausbildung von unerwünschten Nickel-Platin-Phasen zumindest reduziert. Eine Reduktion der Temperatur beim Diffusionsglühen wird überhaupt erst dadurch möglich, dass zuvor die Zwischenschicht auf dem Stab aufgetragen wird, da ansonsten das Platin nicht auf dem Nickel haftet.

Des Weiteren kann vorgesehen sein, dass in Schritt E) und vorzugsweise auch in Schritt F) das Diffusionsglühen bei einer Temperatur zwischen 550 °C und 625 °C für mindestens 2 Stunden bis maximal 6 Stunden durchgeführt wird, bei einer Temperatur zwischen 625 °C und 675 °C für mindestens 1 Stunde bis maximal 2 Stunden durchgeführt wird oder bei einer Temperatur zwischen 675 °C und 800 °C für mindestens 10 Minuten bis maximal 60 Minuten durchgeführt wird.

Durch diese Maßnahmen kann die zum Diffusionsglühen erforderliche Zeit bei gegebener Temperatur möglichst kurz gehalten werden.

Das vorliegende Patent offenbart auch einen Manteldraht mit einem Nickel-Kern aus Nickel oder einer Nickelbasis-Legierung, einer Zwischenschicht aus wenigstens einem der Metalle Gold, Silber, Palladium, Kupfer, Iridium, Ruthenium und Rhodium oder aus einer Gold-, Silber-, Palladium-, Kupfer-, Iridium-, Ruthenium- oder Rhodium-Basislegierung und einem Platin-Mantel aus Platin oder einer Platin-Basislegierung. Vorzugsweise ist der Manteldraht mit einem erfindungsgemäßen Verfahren hergestellt.

Der Manteldraht hat dann die zu dem Verfahren angegebenen Vorteile.

Es kann dabei vorgesehen sein, dass der Manteldraht maximal 24 Gew% Platin oder Platin-Basislegierung aufweist, bevorzugt maximal 22 Gew% Platin oder Platin-Basislegierung aufweist, besonders bevorzugt maximal 21 Gew% Platin oder Platin-Basislegierung aufweist, ganz besonders bevorzugt maximal 20 Gew% Platin oder Platin-Basislegierung aufweist.

Es kann auch vorgesehen sein, dass der Platin-Mantel zwischen 10% und 22% des Gewichts des Manteldrahts aufweist, ganz besonders bevorzugt der Platin-Mantel zwischen 17% und 21% des Gewichts des Manteldrahts aufweist.

Hierdurch kann der Manteldraht kostensparend mit weniger Platin hergestellt werden, als herkömmlich hergestellte Nickel-Platin-Manteldrähte. Bevorzugt befindet sich das Platin zu wenigstens 99% im Platin-Mantel des Manteldrahts.

Es kann ferner vorgesehen sein, dass der Manteldraht zumindest 10 Gew% Platin oder Platin-Basislegierung aufweist, bevorzugt zumindest 15 Gew% Platin oder Platin-Basislegierung aufweist, besonders bevorzugt zumindest 17 Gew% Platin oder Platin-Basislegierung aufweist.

Hierdurch wird sichergestellt, dass die Schichtstärke des Platin-Mantels ausreichend dick ist, um eine Diffusion von Nickel an die Oberfläche des Platin-Mantels zu verhindern.

Es kann auch vorgesehen sein, dass der Manteldraht im Bereich der Zwischenschicht im Platin oder der Platin-Basislegierung und vorzugsweise auch im Nickel oder der Nickel-Basislegierung keine Nickel-Platin-Mischkristalle aufweist.

Unter Nickel-Platin-Mischkristallen sind insbesondere die Phasen Ni₃Pt und NiPt zu verstehen.

Hierdurch wird verhindert, dass beim Durchlaufreduzieren oder Ziehen des Verbunds die Mischkristalle zu einer ungleichmäßigen Schichtstärke des Platin-Mantels führen.

Der Erfindung liegt die überraschende Erkenntnis zugrunde, dass es durch die Verwendung der metallischen Zwischenschicht in Kombination mit der niedrigen Temperatur zum Diffusionsglühen gelingt, durch Durchlaufreduzieren und durch Ziehen durch Ziehsteine einen Manteldraht mit einem Kern aus Nickel und einem Mantel aus Platin herzustellen, bei dem der Platin-Mantel eine gleichmäßigere Schichtstärke aufweist, als bei herkömmlichen Nickel-Platin-Manteldrähten, die durch Ziehen durch Ziehsteine gefügt werden. Hierdurch lässt sich die Schichtstärke des Platin-Mantels und damit der Platin-Einsatz reduzieren. Gleichzeitig erfüllt der erfindungsgemäß hergestellte Nickel-Platin-Manteldraht höhere Anforderungen bezüglich Gleichmäßigkeit und kann so in zusätzlichen Anwendungsgebieten eingesetzt werden. Die Zwischenschicht verringert die Diffusion von Nickel in das Platin (und in geringem Umfang auch umgekehrt) und kann so die Bildung von Nickel-Platin-Mischkristallen verhindern, die das Umformverhalten des Platin-Mantels beim Durchlaufreduzieren und beim Ziehen negativ beeinflussen, indem sich der Platin-Mantel nicht mehr gleichmäßig reduzieren lässt. Gleichzeitig dient die Zwischenschicht als Haftvermittler und ermöglicht so ein Durchlaufreduzieren und ein Ziehen trotz Diffusionsglühung bei niedrigeren Temperaturen, ohne dass sich der Platin-Mantel beim Durchlaufreduzieren und beim Ziehen vom Nickel-Kern löst.

Die erreichbare Schichtstärke ist bei 25 Gew% Pt ca. 6,30 µm, also um den Faktor 2,5 höher als eigentlich für die Anwendung benötigt. So konnte im Rahmen der vorliegenden Erfindung versucht werden, die Schichtstärkenverteilung zu homogenisieren und dadurch die Option zu erhalten, den Anteil an benötigtem Platin zu reduzieren.

Im Rahmen der vorliegenden Erfindung wurde erkannt, dass die relativ hohe Schichtstärke des Platin-Mantels nur deshalb notwendig ist, weil beim Durchlaufreduzieren und beim Ziehen des Verbunds durch die Ziehsteine die Schichtstärke lokal stark unterschiedlich reduziert wird. Ursache ist die im Patent DE 101 53 217 B4 beschriebene Vorgehensweise zur Vermittlung der Haftung zwischen Nickel und Platin. Die erste Glühbehandlung bei 1000°C nach dem Aufziehen des Platin-Rohrs ist ursächlich für die unregelmäßige Schichtverteilung und ist schon bei einer Zwischenstufe mit einem Durchmesser von 4,42 mm bei mikroskopischen Untersuchungen zu erkennen.

In mikroskopischen Untersuchungen konnte nachvollzogen werden, dass sich unregelmäßige Nickel-Platin-Legierungszonen bilden, die das weitere Umformverhalten beeinflussen und das Ausprägen einer homogenen Schichtverteilung des Mantels beim Durchlaufreduzieren und beim Ziehen verhindern. Versuche, diese Nickel-Platin-Phasen durch Anpassung der Wärmebehandlung zu modifizieren, führten jedoch nicht zum Erfolg.

Im Rahmen der vorliegenden Erfindung wurde die notwendige hohe Diffusionstemperatur für die Haftung des Platin-Rohrs durch die notwendige Diffusion der Nickel-Atome in den Platin-Mantel als zugrundeliegendes Problem identifiziert. Gleichzeitig ist dies die Ursache für die mangelhafte Verteilung der Schichtstärken des Platin-Mantels und sollte bei deutlich niedrigerer Temperatur erfolgen.

Durch Einbringen einer oder mehrerer metallischen Zwischenschichten kann erreicht werden, die notwendige Diffusionstemperatur deutlich zu senken und/oder die Diffusion über die Einschränkung beziehungsweise Förderung der Beweglichkeit der Nickel-Atome zu steuern. Damit wird eine deutliche Reduktion der Prozesstemperatur von 1000°C auf etwa 700°C zur Verbindung des Nickel-Kerns mit dem Platin-Mantel erreicht. Auf diese Weise kann eine Bildung von schädlichen Nickel-Platin-Legierungszonen verhindert werden und damit eine Homogenisierung des Platin-Mantels (der Platin-Beschichtung) auf dem Nickel-Kern erreicht werden.

Vorteil der vorliegenden Erfindung ist es auch, den Prozess sicher und reproduzierbar darstellen zu können, um bei einer gegebenen Mindest-Schichtstärke eine deutlich höhere Prozesssicherheit zu erreichen. Dies ist zum Beispiel durch eine ohne weiteres erreichbare Standardabweichung der Schichtstärke des Platin-Mantels von weniger als 1,5 µm gegeben. Auf diese Weise kann mit einer Standardabweichung von weniger als 1,5 µm die nominelle Gesamt-Schichtstärke von 6,3 µm nach dem Stand der Technik um 1,3 µm auf 5,0 µm reduziert werden. Dies entspricht einem Einsparpotential von 17,6 % der bisher benötigten Platin-Menge.

Im Folgenden werden Ausführungsbeispiele der Erfindung sowie Manteldrähte und Zwischenprodukte nach dem Stand der Technik anhand von zwölf Figuren erläutert, ohne jedoch dabei die Erfindung zu beschränken. Dabei zeigt:
Figur 1: eine schematische perspektivische Querschnittansicht eines mit dem erfindungsgemäßen Verfahren hergestellten Manteldrahts;
Figur 2: eine lichtmikroskopische Aufnahme eines Querschliffs durch einen Manteldraht nach dem Stand der Technik;
Figur 3: eine lichtmikroskopische Aufnahme eines Querschliffs durch ein Zwischenprodukt zur Herstellung eines Manteldrahts nach dem Stand der Technik;
Figur 4: eine Vergrößerung des Grenzbereichs der Figur 2;
Figur 5: eine lichtmikroskopische Aufnahme eines Querschliffs durch einen ersten mit dem erfindungsgemäßen Verfahren hergestellten Manteldraht;
Figur 6: eine lichtmikroskopische Aufnahme eines Querschliffs durch ein Zwischenprodukt zur Herstellung des Manteldrahts nach Figur 5;
Figur 7: eine lichtmikroskopische Aufnahme eines Querschliffs durch einen zweiten mit dem erfindungsgemäßen Verfahren hergestellten Manteldraht;
Figur 8: eine lichtmikroskopische Aufnahme eines Querschliffs durch ein Zwischenprodukt zur Herstellung des Manteldrahts nach Figur 7;
Figur 9: eine lichtmikroskopische Aufnahme eines Querschliffs durch den ersten Manteldraht nach Figur 5 mit hoher Vergrößerung;
Figur 10: eine lichtmikroskopische Aufnahme eines Querschliffs durch den zweiten Manteldraht nach Figur 7 mit hoher Vergrößerung;
Figur 11: eine schematische Querschnittansicht durch einen Ziehstein während des Ziehens eines mit dem erfindungsgemäßen Verfahren hergestellten Manteldrahts; und
Figur 12: den Ablauf eines erfindungsgemäßen Verfahrens als Flussdiagramm.

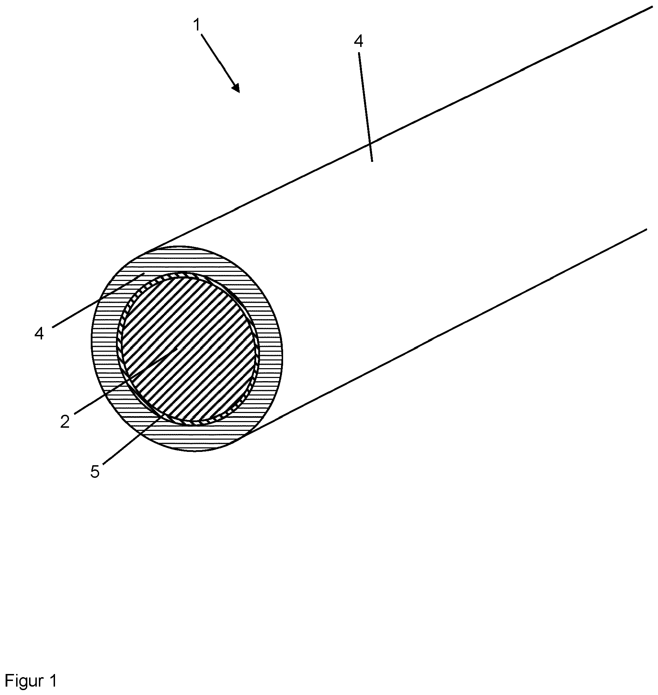

Figur 1 zeigt eine schematische perspektivische Querschnittansicht auf einen mit dem erfindungsgemäßen Verfahren hergestellten Manteldraht 1 beziehungsweise auf einen so hergestellten Manteldraht 1 mit einem zylindersymmetrischen Aufbau. Der Manteldraht 1 besteht aus einem Nickel-Kern 2 aus Nickel oder einer Nickel-Basislegierung, einem äußeren Platin-Mantel 4 aus Platin oder einer Platin-Basislegierung und einer Zwischenschicht 5 aus Gold, Silber, Palladium, Kupfer, Iridium, Ruthenium oder Rhodium oder einer Gold-, Silber-, Palladium-, Kupfer-, Iridium-, Ruthenium- oder Rhodium-Basislegierung. Die Zwischenschicht 5 ist zwischen dem Nickel-Kern 2 und dem Platin-Mantel 4 angeordnet. Die Zwischenschicht 5 kann den Nickel-Kern 2 und den Platin-Mantel 4 vollständig voneinander trennen.

Optional kann eine zusätzliche metallische Diffusionsschutzschicht (nicht gezeigt) als zusätzliche Zwischenschicht zwischen der Zwischenschicht 5 und dem äußeren Mantel 4 vorgesehen sein. Auch kann optional eine Haftvermittlungsschicht (nicht gezeigt) als zusätzliche Zwischenschicht zwischen dem Nickel-Kern 2 und der Zwischenschicht 5 angeordnet sein.

Der Nickel-Kern 2 verläuft im Innersten des Manteldrahts 1. Die Zwischenschicht 5 umschließt den Nickel-Kern 2. Der Platin-Mantel 4 umschließt die Zwischenschicht 5 Die Zwischenschicht 5 kann als Diffusionsschutzschicht zwischen dem Nickel-Kern 2 und dem Platin-Mantel 4 angeordnet sein und die Migration von Nickel-Atomen und Nickel-Ionen aus dem Nickel-Kern 2 in den Platin-Mantel 4 verhindern beziehungsweise erschweren, damit diese keine Nickel-Platin-Legierungsausscheidungen in Form von Nickel-Platin-Mischkristallen im Bereich der Grenzfläche insbesondere im Platin-Mantel 4 bilden.

Der Nickel-Kern 2 kann einen Durchmesser von etwa 190 µm haben, der Platin-Mantel 4 kann eine Schichtstärke von etwa 6 µm haben und die Zwischenschicht 5 kann eine Schichtstärke von weniger als 1 µm haben. Die optionale Haftvermittlungsschicht und die optionale zusätzliche Diffusionsschutzschicht können dünner als 1 µm ausgebildet sein.

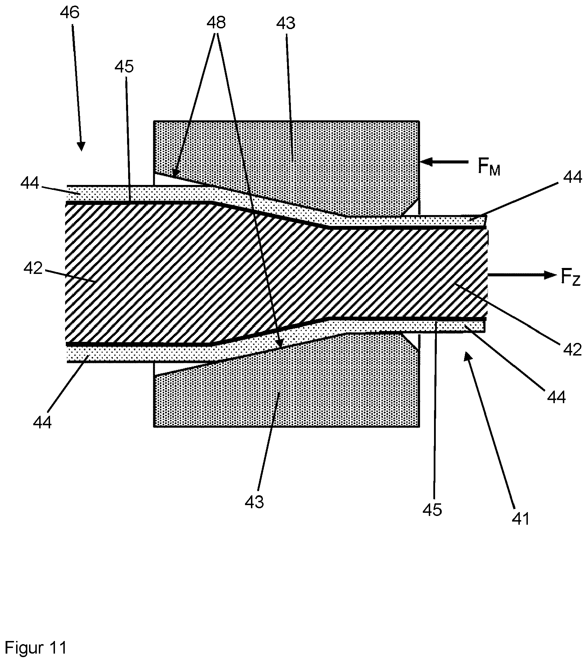

Zur Herstellung des Manteldrahts 1 kann zunächst ein Rundstab aus Nickel oder einer Nickel-Basislegierung (nicht gezeigt) galvanisch mit einer Schicht aus Gold, Silber, Palladium, Kupfer, Iridium, Ruthenium oder Rhodium oder einer Gold-, Silber-, Palladium-, Kupfer-, Iridium-, Ruthenium- oder Rhodium-Basislegierung beschichtet werden. Der Rundstab selbst kann schmelzmetallurgisch, durch Schmieden, durch Walzen, durch Ziehen oder durch Strangpressen hergestellt werden. Anschließend kann der beschichtete Rundstab in ein Platin-Rohr aus Platin oder einer Platin-Basislegierung (nicht gezeigt) mit passendem Außendurchmesser eingesteckt werden. Das Platin-Rohr kann schmelzmetallurgisch oder durch Strangpressen hergestellt werden. Das Platin-Rohr mit dem beschichteten Rundstab darin kann dann durch einen Ziehstein gezogen werden (siehe Figur 11) oder sie können durch Durchlaufreduzieren miteinander verbunden werden, um das Platin-Rohr mit dem Rundstab zu fügen und den Außendurchmesser zu verringern. Als Ziehstein kann ein Hartmetallziehstein verwendet werden. Das so erhaltene Zwischenprodukt (der so erhaltene Verbund) kann wiederholt durch Ziehsteine mit immer kleinerem Innendurchmesser gezogen werden, bis der gewünschte Enddurchmesser des Manteldrahts 1 erreicht ist. Zwischen dem Ziehen kann ein Diffusionsglühen bei einer Temperatur zwischen 550 °C und 900 °C erfolgen, bevorzugt bei einer Temperatur zwischen 650 °C und 800 °C erfolgen, besonders bevorzugt bei einer Temperatur zwischen 670 °C und 730 °C erfolgen und ganz besonders bevorzugt bei einer Temperatur von 700 °C durchgeführt werden.

Die optionale Haftvermittlungsschicht und die zusätzliche Diffusionsschutzschicht können beide galvanisch vor dem ersten Ziehen auf den Rundstab beziehungsweise auf die Zwischenschicht aufgetragen werden. Die Zwischenschicht 5 wird dann gegebenenfalls auf die Haftvermittlungsschicht aufgebracht.

Es ist möglich, den Manteldraht 1 als langen Endlosdraht (mindestens 10 m) auf einer Spule (nicht gezeigt) aufzuwickeln, um die spätere Verarbeitung zu vereinfachen.

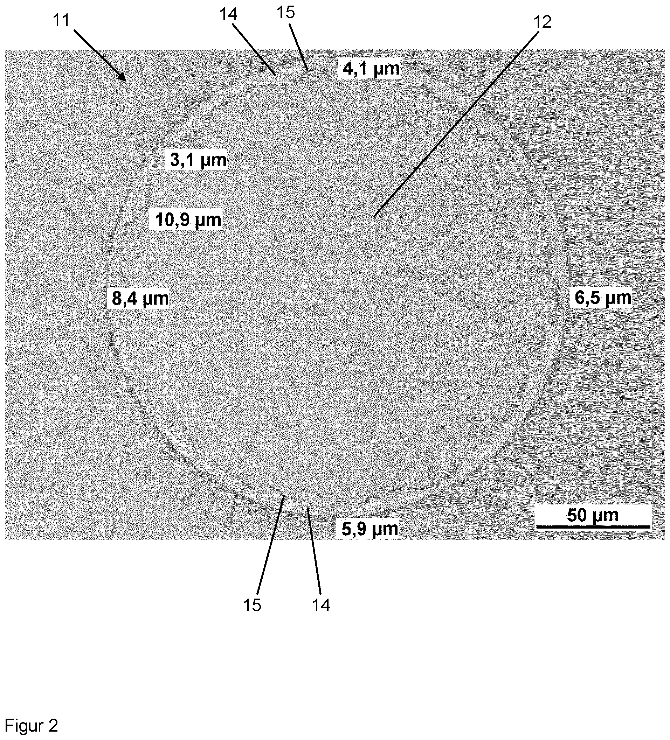

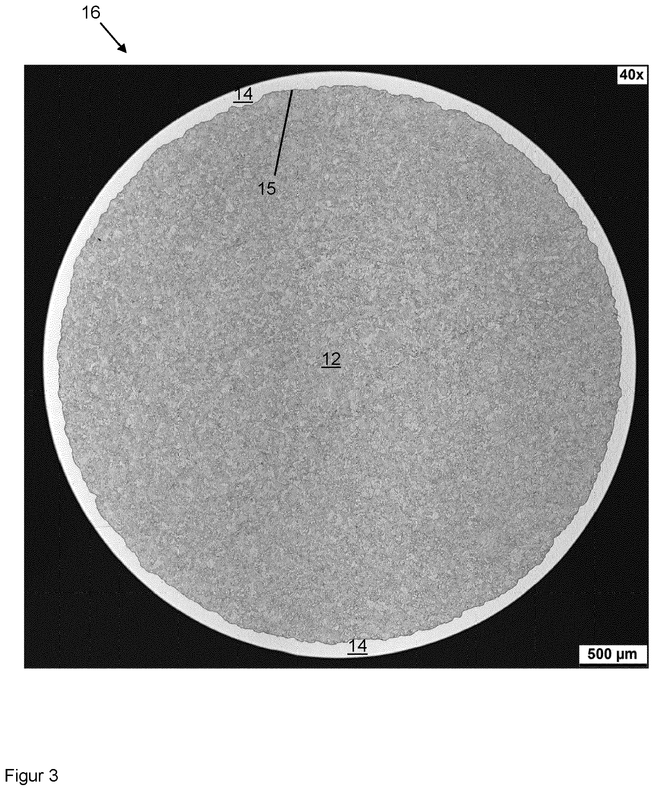

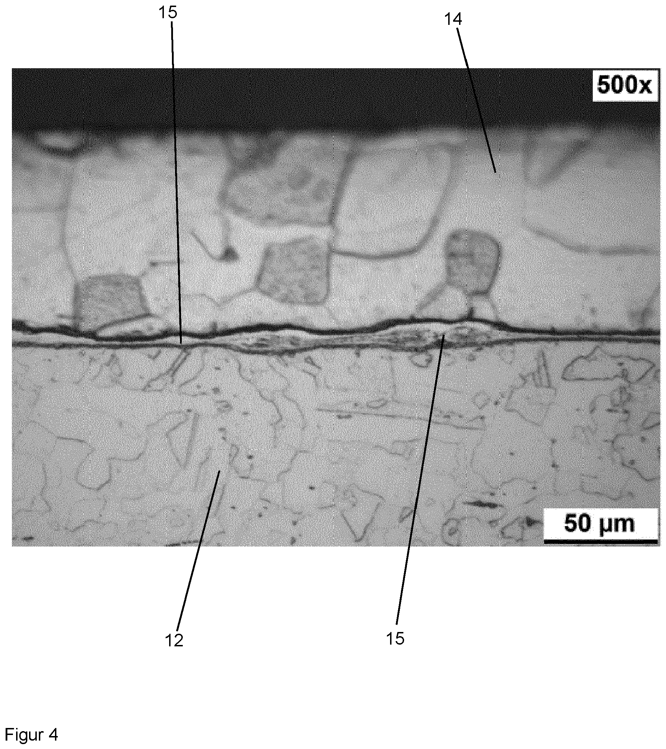

Die Figuren 2 bis 4 zeigen lichtmikroskopische Aufnahmen eines Nickel-Platin-Manteldrahts 11 (Figur 2) und eines Zwischenprodukts 16 (Figur 3 und 4) während der Herstellung mit Ziehsteinen gemäß einem aus dem Stand der Technik (DE 101 53 217 B4) bekannten Verfahren. Der Manteldraht 11 hat einen Nickel-Kern 12 aus Nickel und einen Platin-Mantel 14 aus Platin.

Zur Herstellung des Manteldrahts 11 beziehungsweise des Zwischenprodukts 16 wurde ein Rundstab aus Nickel in ein passendes Platin-Rohr aus Platin gesteckt. Das Platin-Rohr mit dem Rundstab darin wird durch einen Ziehstein gezogen und dabei das Platin-Rohr mit dem Rundstab gefügt. Anschließend wird der so entstandene Verbund bei einer Temperatur von 1000 °C für 15 Minuten diffusionsgeglüht. Nachfolgend wird der Verbund durch weitere Ziehsteine mit immer kleinerem Innendurchmesser gezogen, wobei nach dem zweiten Ziehschritt eine weitere Diffusionsglühung bei einer Temperatur von 1000 °C für 15 Minuten durchgeführt wird.

Der Manteldraht 11 hat einen Außendurchmesser von 0,20 mm, während das Zwischenprodukt 16 einen Außendurchmesser von 4,42 mm hat. Zwischen dem Nickel-Kern 12 und dem Platin-Mantel 14 ist eine unregelmäßige Grenzschicht 15 ausgeformt. Diese ist auch bereits in dem Zwischenprodukt 16 erkennbar. In einer Vergrößerung des Bereichs der Grenzfläche des Zwischenprodukts 16 (siehe Figur 4) ist die Grenzfläche 15 als unregelmäßig ausgeprägte Zone unter dem Platin-Mantel 14 erkennbar. Diese stark strukturierte Grenzfläche hat sich als Nickel-Platin Legierungsausscheidung herausgestellt und ist härter als das Platin im Platin-Mantel 14. Die ungleichmäßige Ausprägung bewirkt, dass sich der Platin-Mantel 14 beim Ziehen zu geringeren Drahtdurchmessern nicht gleichmäßig verringern kann.

Wie in Figur 2 gut zu erkennen ist, weist der Manteldraht 11 erhebliche Abweichungen in der Schichtstärke des Platin-Mantels 14 auf. Die Schichtstärken reichen von 3,1 µm bis 10,9 µm. Im Rahmen einer statistischen Analyse, bei der 79 Spulen des Manteldrahts 11 mit je vier um 90° gegeneinander versetzte Schichtdicken gemessen wurden, ergab sich eine mittlere Schichtdicke von 6,45 µm mit einer Standardabweichung von 2,23 µm. Um eine Mindest-Schichtdicke von 2,5 µm sicherzustellen benötigt man demzufolge einen Platin-Mantel 14 der mehr als 25 Gew% des Gesamtgewichts des Manteldrahts 11 beziehungsweise des Zwischenprodukts 16 hat.

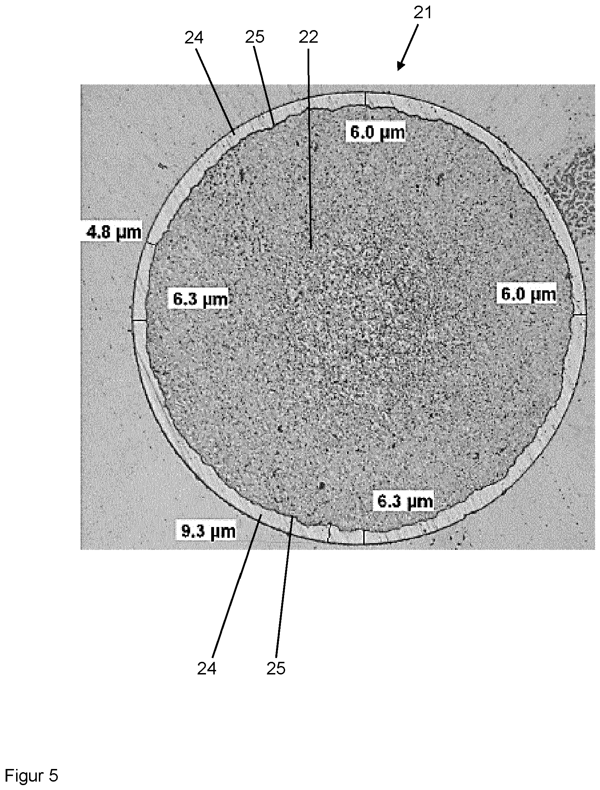

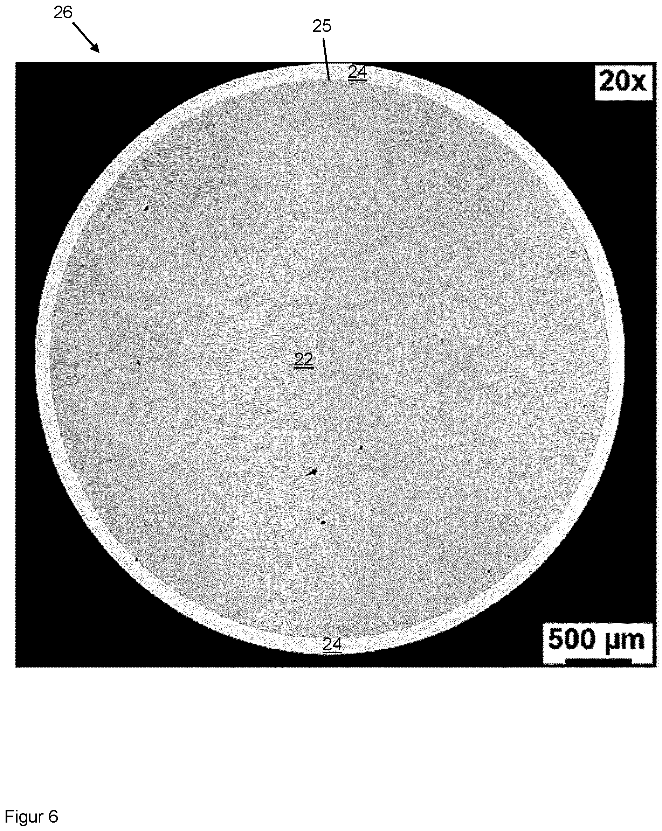

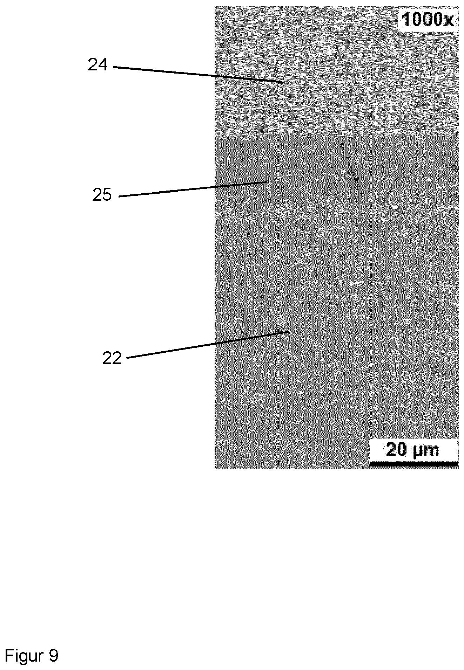

Die Figuren 5, 6 und 9 zeigen lichtmikroskopische Aufnahmen eines mit dem erfindungsgemäßen Verfahren hergestellten Nickel-Platin-Manteldrahts 21 (Figur 5) und eines Zwischenprodukts 26 (Figuren 6 und 9) während der Herstellung mit Ziehsteinen mit einem erfindungsgemäßen Verfahren. Der Manteldraht 21 hat einen Nickel-Kern 22 aus Nickel und einen Platin-Mantel 24 aus Platin. Der Manteldraht 21 hat einen Außendurchmesser von 0,20 mm, während das Zwischenprodukt 26 einen Außendurchmesser von 4,42 mm hat. Zwischen dem Nickel-Kern 22 und dem Platin-Mantel 24 ist eine Gold-Zwischenschicht 25 aus Feingold angeordnet.

Die Gold-Zwischenschicht 25 wurde als Diffusionsvermittler mit Schichtstärken zwischen 5 µm und 10 µm galvanisch auf einem Rundstab aus Nickel aufgebracht, bevor der beschichtete Rundstab mit einem Platin-Rohr aus Platin mit Hilfe eines Ziehsteins gefügt wird und zu dem Zwischenprodukt 26 und schließlich zu dem Manteldraht 21 umgeformt wird. Feingold hat bereits eine hohe Diffusionsgeschwindigkeit bei geringen Temperaturen um 600 °C und ist gut löslich in Nickel, sowie auch in Platin.

Das Platin-Rohr mit dem mit Feingold beschichteten Rundstab darin wird durch einen Ziehstein gezogen und dabei das Platin-Rohr mit dem mit Feingold beschichteten Rundstab gefügt. Anschließend wird der so entstandene Verbund bei einer Temperatur von 700 °C für 30 Minuten diffusionsgeglüht. Nachfolgend wird der Verbund durch weitere Ziehsteine mit immer kleinerem Innendurchmesser gezogen, wobei nach dem zweiten Ziehschritt eine weitere Diffusionsglühung bei einer Temperatur von 700 °C für 20 Minuten durchgeführt wird.

Der Manteldraht 21 hat einen Außendurchmesser von 0,20 mm, während das Zwischenprodukt 26 einen Außendurchmesser von 4,42 mm hat. In einer Vergrößerung des Bereichs der Gold-Zwischenschicht 25 des Zwischenprodukts 26 (siehe Figur 9) sind im Platin-Mantel 24 keine Nickel-Platin-Legierungsausscheidungen erkennbar.

Wie in Figur 5 gut zu erkennen ist, weist der Manteldraht 21 geringere Abweichungen in der Schichtstärke des Platin-Mantels 24 auf als bei dem Manteldraht 11 nach dem Stand der Technik. Die Schichtstärken reichen von 4,8 µm bis 9,3 µm. Im Rahmen einer statistischen Analyse des Manteldrahts 21 wurden 10 Proben mit je vier um 90° gegeneinander versetzte Schichtdicken, plus minimaler und maximaler Schichtdicke, gemessen. Daraus ergab sich eine mittlere Schichtdicke von 6,36 µm mit einer Standardabweichung von 1,49 µm.

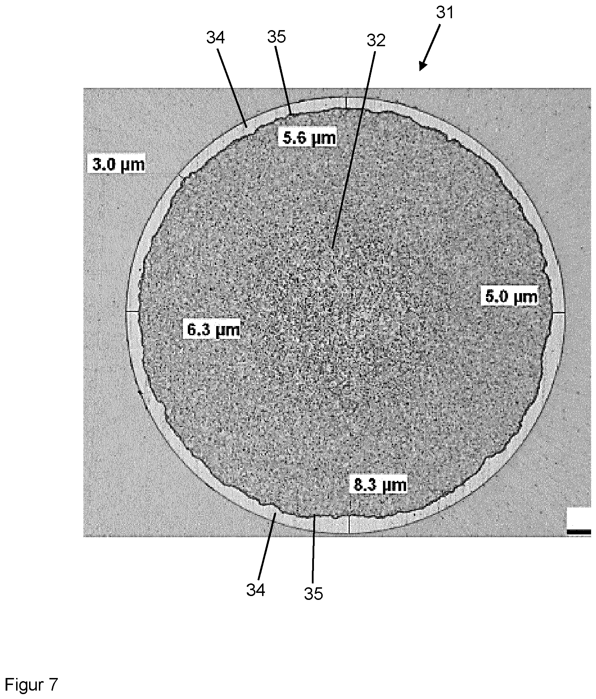

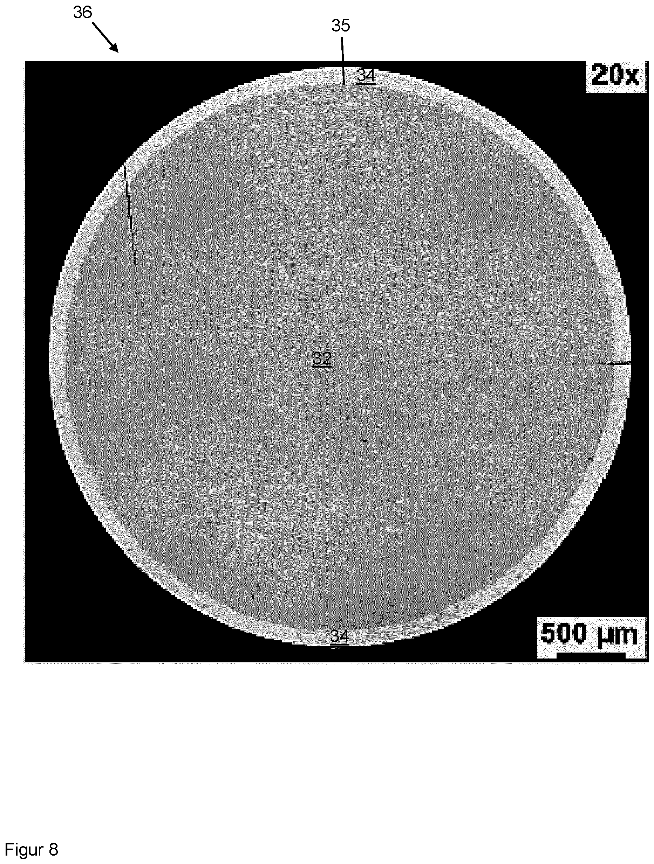

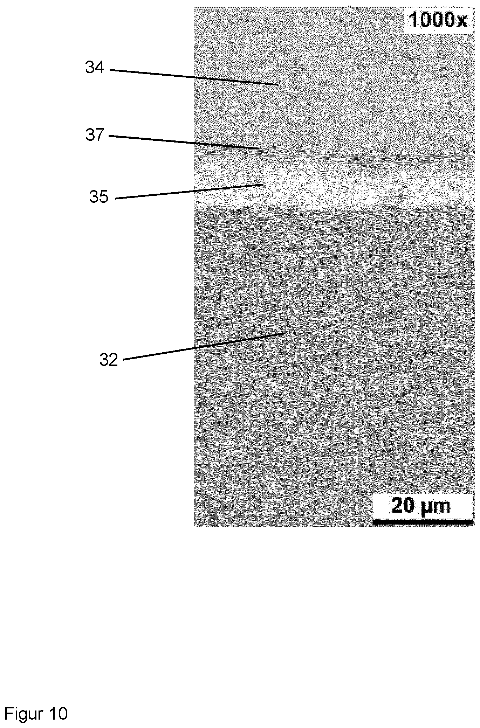

Die Figuren 7, 8 und 10 zeigen lichtmikroskopische Aufnahmen eines mit dem erfindungsgemäßen Verfahren hergestellten Nickel-Platin-Manteldrahts 31 (Figur 7) und eines Zwischenprodukts 36 (Figuren 8 und 10) während der Herstellung mit Ziehsteinen mit einem erfindungsgemäßen Verfahren. Der Manteldraht 31 hat einen Nickel-Kern 32 aus Nickel und einen Platin-Mantel 34 aus Platin. Der Manteldraht 31 hat einen Außendurchmesser von 0,20 mm, während das Zwischenprodukt 36 einen Außendurchmesser von 4,42 mm hat. Zwischen dem Nickel-Kern 32 und dem Platin-Mantel 34 ist eine Silber-Zwischenschicht 35 aus Silber angeordnet.

Die Silber-Zwischenschicht 35 wurde als Sperrschicht mit Schichtstärken zwischen 5 µm und 10 µm galvanisch auf einem Rundstab aus Nickel aufgebracht, bevor der beschichtete Rundstab mit einem Platin-Rohr aus Platin mit Hilfe eines Ziehsteins gefügt wird und zu dem Zwischenprodukt 36 und schließlich zu dem Manteldraht 31 umgeformt wird. Silber hat eine gute Löslichkeit in Platin, jedoch eine schlechtere in Nickel. Ziel ist es, die Nickeldiffusion in das Platin zu behindern beziehungsweise zu verzögern.

Das Platin-Rohr mit dem mit Silber beschichteten Rundstab darin wird durch einen Ziehstein gezogen und dabei das Platin-Rohr mit dem mit Silber beschichteten Rundstab gefügt. Anschließend wird der so entstandene Verbund bei einer Temperatur von 700 °C für 30 Minuten diffusionsgeglüht. Nachfolgend wird der Verbund durch weitere Ziehsteine mit immer kleinerem Innendurchmesser gezogen, wobei nach dem zweiten Ziehschritt eine weitere Diffusionsglühung bei einer Temperatur von 700 °C für 20 Minuten durchgeführt wird.

Der Manteldraht 31 hat einen Außendurchmesser von 0,20 mm, während das Zwischenprodukt 36 einen Außendurchmesser von 4,42 mm hat. In einer Vergrößerung des Bereichs der Silber-Zwischenschicht 35 des Zwischenprodukts 36 (siehe Figur 10) sind im Platin-Mantel 34 keine Nickel-Platin-Legierungsausscheidungen erkennbar. Gleichzeitig ist eine Silber-Platin-Phase 37 zwischen der Silber-Zwischenschicht 35 und dem Platin-Mantel 34 erkennbar.

Wie in Figur 7 gut zu erkennen ist, weist der Manteldraht 31 geringere Abweichungen in der Schichtstärke des Platin-Mantels 34 auf als bei dem Manteldraht 11 nach dem Stand der Technik. Die Schichtstärken reichen von 3,0 µm bis 8,3 µm. Im Rahmen einer statistischen Analyse des Manteldrahts 31 wurden 10 Proben mit je vier um 90° gegeneinander versetzte Schichtdicken, plus minimaler und maximaler Schichtdicke, gemessen. Daraus ergab sich eine mittlere Schichtdicke von 6,21 µm mit einer Standardabweichung von 1,71 µm.

Durch die fehlenden Nickel-Platin-Legierungsausscheidungen in dem mit dem erfindungsgemäßen Verfahren hergestellten Manteldraht 21, 31 wird der Platin-Mantel 24, 34 beim Ziehen gleichmäßiger dünner als bei einem Manteldraht 11 gemäß dem Stand der Technik.

Die Kombination der beiden Effekte, also der Verwendung einer Gold-Zwischenschicht 25 und einer Silber-Zwischenschicht 35 ist ebenfalls möglich. Auch kann eine Zwischenschicht aus einer Gold-Silber-Legierung verwendet werden. Weiterhin sind auch folgende Elemente als Zwischenschicht denkbar: Palladium, Kupfer, Iridium Ruthenium und Rhodium einzeln, als jeweilige Basis-Legierung, als Gemisch oder als Schichtfolge.

Figur 11 zeigt in einer schematischen Querschnittansicht, wie ein Zwischenprodukt 46 mit Hilfe eines Ziehsteins 43 im Rahmen eines erfindungsgemäßen Verfahrens zu einem Manteldraht 41 durch Ziehen umgeformt werden kann. In gleicher Weise und mit der gleichen Technik können selbstverständlich auch vorherige Zwischenprodukte mit größerem Durchmesser (mit Hilfe von Ziehsteinen mit größerem Innendurchmesser) hergestellt werden oder ein Platin-Rohr mit einem beschichteten Rundstab aus Nickel oder einer Nickel-Basislegierung gefügt werden.

Das Zwischenprodukt 46 und der Manteldraht 41 sind zylindrische Drähte und beide weisen einen Nickel-Kern 42 aus Nickel oder einer Nickel-Basislegierung auf sowie einen Platin-Mantel 44 aus Platin oder einer Platin-Basislegierung. Zwischen dem Nickel-Kern 42 und dem Platin-Mantel 44 ist eine Zwischenschicht 45 aus Gold, Silber, Palladium, Kupfer, Iridium, Ruthenium oder Rhodium oder einer Gold-, Silber-, Palladium-, Kupfer-, Iridium-, Ruthenium- oder Rhodium-Basislegierung angeordnet.

Der Ziehstein 43 weist einen sich verjüngenden Durchgang aus einem sehr harten Material wie Hartmetall, Diamant oder Borcarbid auf. Das Zwischenprodukt 46 wird mit einer Zug-Kraft Fz durch den sich verjüngenden Durchgang des Ziehsteins 43 gezogen. Hierzu muss der Ziehstein 43 mit einer Gegen-Kraft F_{M} gegengehalten werden.

An den Flanken eines Öffnungswinkels 48 des Ziehsteins 43 wird der Außendurchmesser des Zwischenprodukts 46 verringert. Der Manteldraht 41 wird dabei dünner und länger.

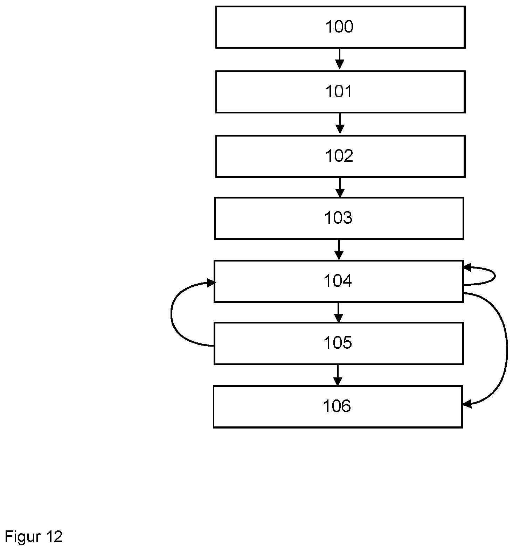

Im Folgenden wird anhand von Figur 12 der Ablauf eines beispielhaften erfindungsgemäßen Verfahrens geschildert.

In einem ersten Arbeitsschritt 100 kann ein Rundstab aus Nickel mit einer Zwischenschicht aus Gold, Silber oder einer Gold-Basislegierung oder einer Silber-Basis-Legierung oder einer Gold-Silber-Legierung galvanisch beschichtet werden.

In einem zweiten Arbeitsschritt 101 kann der so beschichtete Rundstab in ein Rohr aus Platin eingesteckt werden.

In einem dritten Arbeitsschritt 102 kann das Rohr mit dem beschichteten Rundstab darin durch einen Ziehstein gezogen werden und so der beschichtete Rundstab mit dem Rohr gefügt werden. Dabei wird der Außendurchmesser des Verbunds im Vergleich zum Außendurchmesser des Rohrs verringert. Die Zwischenschicht ist dabei zwischen dem Nickel des Rundstabs und dem Platin des Rohrs angeordnet.

In einem vierten Arbeitsschritt 103 kann das so gewonnene Zwischenprodukt bei einer Temperatur zwischen 650 °C und 800 °C diffusionsgeglüht werden.

In einem fünften Arbeitsschritt 104 kann der so erhaltene Verbund als Zwischenprodukt durch einen Ziehstein mit kleinerem Innendurchmesser gezogen werden.

In einem optionalen sechsten Arbeitsschritt 105 kann das so gewonnene Zwischenprodukt bei einer Temperatur zwischen 650 °C und 800 °C diffusionsgeglüht werden.

Der fünfte Arbeitsschritt 104 und optional der sechste Arbeitsschritt 105 können wiederholt werden, bis stufenweise der gewünschte Drahtdurchmesser für den Manteldraht erhalten ist.

Anschließend kann optional in einem siebten Arbeitsschritt 106 der Manteldraht auf eine Spule aufgewickelt werden.

### Bezugszeichenliste

- 1, 11, 21, 31, 41: Manteldraht
- 2, 12, 22, 32, 42: Nickel-Kern
- 4, 14, 24, 34, 44: Platin-Mantel
- 5, 45: Zwischenschicht
- 15: Grenzschicht
- 16, 26, 36, 46: Zwischenprodukt
- 25: Gold-Zwischenschicht
- 35: Silber-Zwischenschicht
- 37: Silber-Platin-Phase
- 43: Ziehstein
- 48: Öffnungswinkel
- 100: erster Arbeitsschritt
- 101: zweiter Arbeitsschritt
- 102: dritter Arbeitsschritt
- 103: vierter Arbeitsschritt
- 104: fünfter Arbeitsschritt
- 105: sechster Arbeitsschritt
- 106: siebter Arbeitsschritt
- F_{M}: Gegen-Kraft zum Halten
- Fz: Zug-Kraft zum Ziehen

## Patentansprüche

1. Verfahren zur Herstellung eines Manteldrahts (1, 21, 31, 41) mit einem Nickel-Kern (2, 22, 32, 42) und einem Platin-Mantel (4, 24, 34, 44), das Verfahren aufweisend die folgenden chronologischen Schritte:
A) Bereitstellen eines Stabs aus Nickel oder einer Nickel-Basislegierung und eines Rohrs aus Platin oder einer Platin-Basislegierung;
B) Beschichten des Stabs und/oder einer Innenseite des Rohrs mit zumindest einer Zwischenschicht (5, 25, 35, 45) aus wenigstens einem der Metalle Gold, Silber, Palladium, Kupfer, Iridium, Ruthenium und Rhodium oder aus einer Gold-, Silber-, Palladium-, Kupfer-, Iridium-, Ruthenium- oder Rhodium-Basislegierung;
C) Einstecken des Stabs in das Rohr nach dem Beschichten;
D) Durchlaufreduzieren des Rohrs mit dem Stab darin durch Ziehen durch einen Ziehstein oder durch Walzen oder durch Hämmern und dadurch Fügen des Rohrs mit dem Stab, wobei bei dem Durchlaufreduzieren die Außendurchmesser des Rohrs und des Stabs reduziert werden; **gekennzeichnet durch** die nachfolgenden chronologischen Schritte:
E) Diffusionsglühen des so gefügten Verbunds bei einer Temperatur zwischen 550 °C und 900 °C; und
F) Ziehen des diffusionsgeglühten Verbunds durch einen weiteren Ziehstein (43) oder mehrmaliges Ziehen des diffusionsgeglühten Verbunds durch mehrere weitere Ziehsteine, wobei bei jedem Ziehen der Außendurchmesser des Verbunds reduziert wird.

2. Verfahren nach Anspruch 1, **dadurch gekennzeichnet, dass**
in Schritt B) die zumindest eine Zwischenschicht (5, 25, 35, 45) mit einer Stärke zwischen 0,1 µm und 100 µm auf den Stab aufgebracht wird, bevorzugt mit einer Stärke zwischen 1 µm und 30 µm aufgebracht wird, besonders bevorzugt mit einer Stärke zwischen 5 µm und 10 µm aufgebracht wird.

3. Verfahren nach einem der vorangehenden Ansprüche, **dadurch gekennzeichnet, dass**
der Stab zylindrisch ist und einen Durchmesser zwischen 5 mm und 100 mm aufweist, wobei das Rohr einen Innendurchmesser aufweist der zwischen 0,1 mm und 5 mm größer ist als der Durchmesser des Stabs.

4. Verfahren nach einem der vorangehenden Ansprüche, **dadurch gekennzeichnet, dass**
das Rohr weniger wiegt als 25% des Gewichts des Stabs, bevorzugt das Rohr maximal 24% des Gewichts des Stabs aufweist, besonders bevorzugt das Rohr maximal 22% des Gewichts des Stabs aufweist, ganz besonders bevorzugt das Rohr maximal 21% des Gewichts des Stabs aufweist, speziell bevorzugt das Rohr maximal 20% des Gewichts des Stabs aufweist.

5. Verfahren nach einem der vorangehenden Ansprüche, **dadurch gekennzeichnet, dass**
das Rohr mehr wiegt als 4% des Gewichts des Stabs, bevorzugt das Rohr mindestens 10% des Gewichts des Stabs aufweist, besonders bevorzugt das Rohr mindestens 15% des Gewichts des Stabs aufweist, ganz besonders bevorzugt das Rohr mindestens 17% des Gewichts des Stabs aufweist.

6. Verfahren nach einem der vorangehenden Ansprüche, **dadurch gekennzeichnet, dass**
der mit dem Verfahren hergestellte Manteldraht (1, 21, 31, 41) eine Dicke von mindestens 10 µm und von höchstens 2 mm aufweist, bevorzugt von mindestens 50 µm und von höchstens 500 µm aufweist, besonders bevorzugt von 200 µm aufweist.

7. Verfahren nach einem der vorangehenden Ansprüche, **dadurch gekennzeichnet, dass**
die zumindest eine Zwischenschicht (5, 25, 35, 45) aus Gold, Silber, einer Gold-Basislegierung, einer Silber-Basislegierung oder einer Gold-Silber-Legierung besteht oder wenigstens eine der zumindest einen Zwischenschicht (5, 25, 35, 45) aus Gold, Silber, einer Gold-Basislegierung, einer Silber-Basislegierung oder einer Gold-Silber-Legierung besteht.

8. Verfahren nach einem der vorangehenden Ansprüche, **dadurch gekennzeichnet, dass**
der Manteldraht (1, 21, 31, 41) nach Schritt F) einen Platin-Mantel (4, 24, 34, 44) aufweist, dessen Schichtstärke eine Standardabweichung von höchstens 30% der mittleren Schichtstärke des Platin-Mantels oder von höchstens 1,5 µm aufweist, bevorzugt von höchstens 20% der mittleren Schichtstärke des Platin-Mantels oder von höchstens 1 µm aufweist.

9. Verfahren nach einem der vorangehenden Ansprüche, **dadurch gekennzeichnet, dass**
das Beschichten des Stabs und/oder des Rohrs mit der Zwischenschicht (5, 25, 35, 45) galvanisch oder durch Auftragen einer Paste oder durch elektrostatisches Pulverbeschichten erfolgt.

10. Verfahren nach einem der vorangehenden Ansprüche, **dadurch gekennzeichnet, dass**
der Manteldraht (1, 21, 31, 41) nach Schritt F) in einem Schritt G) als Spule aufgewickelt wird.

11. Verfahren nach einem der vorangehenden Ansprüche, **dadurch gekennzeichnet, dass**
in Schritt F) nach jedem Ziehen oder nach zumindest einem Ziehen ein Diffusionsglühen des Verbunds bei einer Temperatur zwischen 550 °C und 900 °C erfolgt.

12. Verfahren nach einem der vorangehenden Ansprüche, **dadurch gekennzeichnet, dass**
in Schritt E) und vorzugsweise auch in Schritt F) gemäß Anspruch 11 das Diffusionsglühen bei einer Temperatur zwischen 600 °C und 800 °C durchgeführt wird, bevorzugt zwischen 650 °C und 750 °C durchgeführt wird, besonders bevorzugt bei 700 °C durchgeführt wird.

13. Verfahren nach einem der vorangehenden Ansprüche, **dadurch gekennzeichnet, dass**
in Schritt E) und vorzugsweise auch in Schritt F) gemäß Anspruch 11 das Diffusionsglühen bei einer Temperatur zwischen 550 °C und 625 °C für mindestens 2 Stunden und maximal 6 Stunden durchgeführt wird, bei einer Temperatur zwischen 625 °C und 675 °C für mindestens 1 Stunde und maximal 2 Stunden durchgeführt wird oder bei einer Temperatur zwischen 675 °C und 800 °C für mindestens 10 Minuten und maximal 60 Minuten durchgeführt wird.

## Claims

1. A method for producing a clad wire (1, 21, 31, 41) having a nickel core (2, 22, 32, 42) and a platinum cladding (4, 24, 34, 44), the method comprising the following chronological steps:
A) Providing a rod made of nickel or a nickel-based alloy and a tube made of platinum or a platinum-based alloy tube;
B) Coating the rod and/or an inner surface of the tube with at least one intermediate layer (5, 25, 35, 45) of at least one of the metals gold, silver, palladium, copper, iridium, ruthenium and rhodium or of a gold-, silver-, palladium-, copper-, iridium-, ruthenium- or rhodium-based alloy;
C) Inserting the rod in the tube after coating;
D) Continuously reducing the tube with the rod therein by drawing through a drawing die or by rolling or by hammering and thereby joining the tube with the rod, wherein in the continuous reduction the outer diameters of the tube and the rod are reduced; **characterized by** the following chronological steps:
E) Diffusion annealing of the composite thus joined at a temperature between 550 °C and 900 °C; and
F) Drawing the diffusion-annealed composite through a further drawing die (43) or drawing the diffusion-annealed composite several times through a plurality of further drawing dies, the outer diameter of the composite being reduced during each drawing operation.

2. The method according to Claim 1, **characterized in that**
the at least one intermediate layer (5, 25, 35, 45) is applied to the rod with a thickness of between 0.1 µm and 100 µm, preferably with a thickness of between 1 µm and 30 µm, particularly preferably with a thickness of between 5 µm and 10 µm.

3. The method according to Claim 1 or 2, **characterized in that**
the rod is cylindrical and has a diameter between 5 mm and 100 mm, the tube having an inner diameter between 0.1 mm and 5 mm larger than the diameter of the rod.

4. The method according to any one of the preceding Claims, **characterized in that** the tube weighs less than 25% of the weight of the rod, preferably the tube has a maximum of 24% of the weight of the rod, particularly preferably the tube has a maximum of 22% of the weight of the rod, very particularly preferably the tube has a maximum of 21% of the weight of the rod, especially preferably the tube has a maximum of 20% of the weight of the rod.

5. The method according to any one of the preceding claims, **characterized in that** the tube weighs more than 4% of the weight of the rod, preferably the tube has at least 10% of the weight of the rod, particularly preferably the tube has at least 15% of the weight of the rod, very particularly preferably the tube has at least 17% of the weight of the rod.

6. The method according to any one of the preceding claims, **characterized in that** the clad wire (1, 21, 31, 41) produced by the method has a thickness of at least 10 µm and of at most 2 mm, preferably of at least 50 µm and of at most 500 µm, especially preferably of 200 µm.

7. The method according to any one of the preceding claims, **characterized in that** the at least one intermediate layer (5, 25, 35, 45) consists of gold, silver, a gold-based alloy, a silver-based alloy or a gold-silver alloy, or at least one of the at least one intermediate layer (5, 25, 35, 45) consists of gold, silver, a gold-based alloy, a silver-based alloy or a gold-silver alloy.

8. The method according to any one of the preceding claims, **characterized in that** the clad wire (1, 21, 31, 41) after step F) has a platinum cladding (4, 24, 34, 44) whose layer thickness has a standard deviation of at most 30% of the average layer thickness of the platinum sheath or has a layer thickness of at most 1.5 µm, preferably whose layer thickness has a standard deviation of at most 20% of the average layer thickness of the platinum sheath or has a layer thickness of at most 1 µm.

9. The method according to any one of the preceding claims, **characterized in that** the coating of the rod and/or the tube with the intermediate layer (5, 25, 35, 45) is carried out galvanically or by applying a paste or by electrostatic powder coating.

10. The method according to any one of the preceding claims, **characterized in that** the clad wire (1, 21, 31, 41) is wound as a coil after step F) in a step G).

11. The method according to any one of the preceding claims, **characterized in that** in step F), after each drawing or after at least one drawing, diffusion annealing of the composite is carried out at a temperature between 550 °C and 900 °C.

12. The method according to any one of the preceding claims, **characterized in that** in step E), and preferably also in step F) according to claim 11, the diffusion annealing is carried out at a temperature between 600 °C and 800 °C, preferably between 650 °C and 750 °C, particularly preferably at 700 °C.

13. The method according to any one of the preceding claims, **characterized in that** in step E), and preferably also in step F) according to claim 11, the diffusion annealing is carried out at a temperature between 550 °C and 625 °C for a minimum of 2 hours and a maximum of 6 hours, at a temperature between 625 °C and 675 °C for a minimum of 1 hour and a maximum of 2 hours or at a temperature between 675 °C and 800 °C for a minimum of 10 minutes and a maximum of 60 minutes.

## Revendications

1. Procédé de fabrication d'un fil sous gaine (1, 21, 31, 41) comportant un noyau de nickel (2, 22, 32, 42) et une gaine de platine (4, 24, 34, 44), le procédé présentant les étapes chronologiques suivantes :
A) fourniture d'une tige en nickel ou en alliage à base de nickel et d'un tube en platine ou en alliage à base de platine ;
B) revêtement de la tige et/ou d'une face intérieure du tube avec au moins une couche intermédiaire (5, 25, 35, 45) en au moins l'un des métaux parmi l'or, l'argent, le palladium, le cuivre, l'iridium, le ruthénium et le rhodium ou en un alliage à base d'or, d'argent, de palladium, de cuivre, d'iridium, de ruthénium ou de rhodium ;
C) insertion de la tige dans le tube, après le revêtement ;
D) réduction en continu du tube comportant la tige par étirage à travers une filière ou par laminage ou par martelage et ainsi assemblage du tube avec la tige, lors de la réduction en continu, les diamètres extérieurs du tube et de la tige étant réduits ; **caractérisé par** les étapes chronologiques suivantes :
E) recuit de diffusion du composite ainsi assemblé à une température entre 550 °C et 900 °C ; et
F) étirage du composite recuit par diffusion à travers une autre filière (43) ou étirage à plusieurs reprises du composite recuit par diffusion à travers plusieurs autres filières, le diamètre extérieur du composite étant réduit à chaque étirage.

2. Procédé selon la revendication 1, **caractérisé en ce que**
à l'étape B), l'au moins une couche intermédiaire (5, 25, 35, 45) est appliquée avec une épaisseur entre 0,1 µm et 100 µm sur la tige, de préférence est appliquée avec une épaisseur entre 1 µm et 30 µm, de manière particulièrement préférée est appliquée avec une épaisseur entre 5 µm et 10 µm.

3. Procédé selon l'une quelconque des revendications précédentes, **caractérisé en ce que** la tige est cylindrique et présente un diamètre entre 5 mm et 100 mm, le tube présentant un diamètre intérieur supérieur de 0,1 mm à 5 mm au diamètre de la tige.

4. Procédé selon l'une quelconque des revendications précédentes, **caractérisé en ce que** le tube pèse moins de 25 % du poids de la tige, de préférence le tube présente au plus 24 % du poids de la tige, de manière particulièrement préférée le tube présente au plus 22 % du poids de la tige, de manière tout particulièrement préférée le tube présente au plus 21 % du poids de la tige, de manière spécialement préférée le tube présente au plus 20 % du poids de la tige.

5. Procédé selon l'une quelconque des revendications précédentes, **caractérisé en ce que** le tube pèse plus de 4 % du poids de la tige, de préférence le tube présente au moins 10 % du poids de la tige, de manière particulièrement préférée le tube présente au moins 15 % du poids de la tige, de manière tout particulièrement préférée le tube présente au moins 17 % du poids de la tige.

6. Procédé selon l'une quelconque des revendications précédentes, **caractérisé en ce que** le fil sous gaine (1, 21, 31, 41) fabriqué avec le procédé présente une épaisseur d'au moins 10 µm et d'au plus 2 mm, de préférence d'au moins 50 µm et d'au plus 500 µm, de manière particulièrement préférée de 200 µm.

7. Procédé selon l'une quelconque des revendications précédentes, **caractérisé en ce que** l'au moins une couche intermédiaire (5, 25, 35, 45) est constituée d'or, d'argent, d'un alliage à base d'or, d'un alliage à base d'argent ou d'un alliage or-argent ou au moins l'une de l'au moins une couche intermédiaire (5, 25, 35, 45) est constituée d'or, d'argent, d'un alliage à base d'or, d'un alliage à base d'argent ou d'un alliage or-argent.

8. Procédé selon l'une quelconque des revendications précédentes, **caractérisé en ce que** le fil sous gaine (1, 21, 31, 41) après l'étape F) présente une gaine de platine (4, 24, 34, 44) dont l'épaisseur de couche présente un écart type d'au plus 30 % de l'épaisseur de couche moyenne de la gaine de platine ou d'au plus 1,5 µm, de préférence d'au plus 20 % de l'épaisseur de couche moyenne de la gaine de platine ou d'au plus 1 µm.

9. Procédé selon l'une quelconque des revendications précédentes, **caractérisé en ce que** le revêtement de la tige et/ou du tube avec la couche intermédiaire (5, 25, 35, 45) s'effectue par galvanisation ou par application d'une pâte ou par revêtement en poudre électrostatique.

10. Procédé selon l'une quelconque des revendications précédentes, **caractérisé en ce que** le fil sous gaine (1, 21, 31, 41) est enroulé en tant que bobine dans une étape G) après l'étape F).

11. Procédé selon l'une quelconque des revendications précédentes, **caractérisé en ce que** à l'étape F), après chaque étirage ou après au moins un étirage, un recuit de diffusion du composite s'effectue à une température entre 550 °C et 900 °C.

12. Procédé selon l'une quelconque des revendications précédentes, **caractérisé en ce que** à l'étape E) et de préférence également à l'étape F) selon la revendication 11, le recuit de diffusion est réalisé à une température entre 600 °C et 800 °C, de préférence est réalisé entre 650 °C et 750 °C, de manière particulièrement préférée est réalisé à 700 °C.

13. Procédé selon l'une quelconque des revendications précédentes, **caractérisé en ce que** à l'étape E) et de préférence également à l'étape F) selon la revendication 11, le recuit de diffusion est réalisé à une température entre 550 °C et 625 °C pendant au moins 2 heures et au plus 6 heures, est réalisé à une température entre 625 °C et 675 °C pendant au moins 1 heure et au plus 2 heures ou est réalisé à une température entre 675 °C et 800 °C pendant au moins 10 minutes et au plus 60 minutes.
